# EUROPEAN PATENT APPLICATION

(11) **EP 1 231 655 A1**
(43) Date of publication of application: **14.08.2002**
(21) Application number: 00946310.0
(22) Date of filing: 13.07.2000
(51) Int. Cl.: H01M 8/02, H01M 8/10

(54) **SEPARATOR FOR SOLID POLYMER ELECTROLYTIC FUEL BATTERY**

(30) Priority: 19.07.1999 JP 20417399
(71) Applicant: Sumitomo Electric Industries, Ltd., Osaka-shi, Osaka 541-0041 (JP)
(72) Inventor: OKUDA, Nobuyuki, Itami-shi, Hyogo 664-0016 (JP); MATSUI, Yasuyuki, Itami-shi, Hyogo 664-0016 (JP); SOGABE, Koichi, Itami-shi, Hyogo 664-0016 (JP); HIKATA, Takeshi, Itami-shi, Hyogo 664-0016 (JP); OKUBO, Soichiro, Itami-shi, Hyogo 664-0016 (JP); OHARA, Hisanori, Itami-shi, Hyogo 664-0016 (JP); ODA, Kazuhiko, Itami-shi, Hyogo 664-0016 (JP); TSUJIOKA, Masanori, Itami-shi, Hyogo 664-0016 (JP); UEMURA, Takashi, Itami-shi, Hyogo 664-0016 (JP)
(74) Representative: Cross, Rupert Edward Blount
(86) International application number: JP0004719
(87) International publication number: WO0106585

(57) **Abstract**

A separator for a solid polymer electrolyte type fuel cell wherein multipile single cells are laminated and made up of a solid polymer electrolyte layer and catalyst electrode layers, gas diffusion electrodes and separators disposed on either side of the solid polymer electrolyte layer, and a fuel cell using the separator. At least a part of the separator to make contact with a gas diffusion layer is coated with a coating layer including a conducting hard carbon film. As a result, the separator has superior corrosion resistance and the fuel cell has a minimal internal resistance.

## Description

### Technical Field

This invention relates to a separator for a fuel cell capable of lowering the internal resistance of the fuel cell, and to a solid polymer electrolyte type fuel cell using this separator.

### Background Art

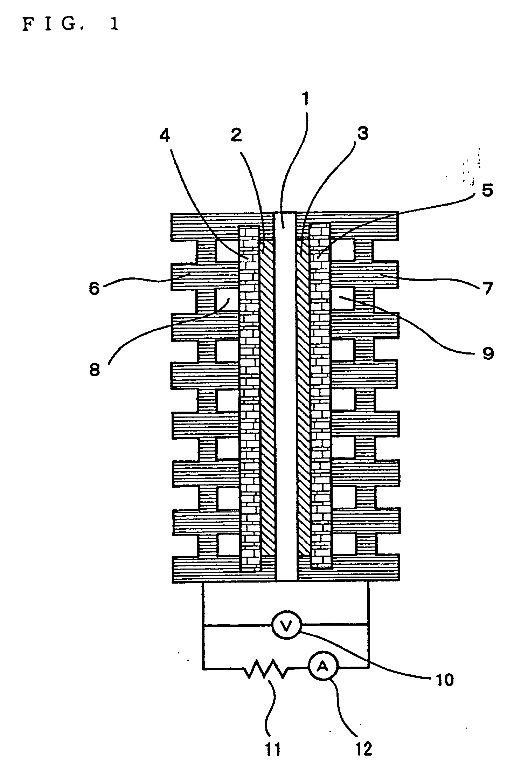

Figure 1 shows a schematic view of a single solid polymer electrolyte fuel cell. This single cell consists of a solid polymer electrolyte film 1; catalyst electrode layers 2, 3 disposed on either side of the solid polymer electrolyte film 1; gas diffusion electrodes 4, 5 disposed on the outer sides of the catalyst electrode layers 2, 3; and separators 6, 7 disposed on the outer sides of the gas diffusion electrodes 4, 5.

In a cell of this kind, when a fuel gas (for example hydrogen) is passed through the gas diffusion electrode 4 and an oxidizing gas (for example oxygen gas) is passed through the gas diffusion electrode 5, an electrochemical reaction occurs through the solid polymer electrolyte, and electrons are produced. By these electrons being extracted to an external circuit by the path from the catalyst electrode layers to the gas diffusion electrodes and from the gas diffusion electrodes to the separators, electrical energy is produced. A single cell can produce about 1 volt, and in practice multiple cells are stacked to make a fuel cell stack.

The operating principle of this kind of fuel cell is such that the separator surfaces must have good electrical conductivity. And because they are exposed to fuel gas or oxidizing gas, the separators must also be made of a material having a high resistance to corrosion. Because of this, the use of carbon materials for separators has been studied (TOYOTA Technical Review Vol. 47, No. 2, Nov. 1997 pp.70-75, and Japanese Unexamined Patent Publication No. H.7-272731). However, because carbon materials have low mechanical strength, there is the drawback of having to use a relatively thick separator and consequently the stack becomes long in length and thus large in size. And at the same time, when the fuel cell is mounted in an automobile or the like, breakage of the separators caused by vibration has been considered a problem.

In view of this, methods using metal plates have been studied; however, metals and alloys having the required corrosion resistance are often expensive. The disadvantage of relatively low cost stainless steel and aluminum alloys is their insufficient corrosion resistance, which causes an increase of the contact resistance and consequently the rise of internal resistance of the fuel cell.

With respect to this problem, for example in Japanese Unexamined Patent Publication No. H.10-308226, a solid polymer electrolyte fuel cell has been proposed wherein a separator substrate is made of aluminum, iron or stainless steel or the like and, a film including carbon is adhered to at least the face of the surface thereof, to make contact with a gas diffusion electrode. There has also been proposed in Japanese Unexamined Patent Publication No. 2000-67881, a separator for a fuel cell made by covering a metal plate having a low electrical resistance with an amorphous carbon film whose hydrogen content is between 1 atom% and 20 atom%. However, because such carbon films and amorphous carbon films have low mechanical strength, that is, because their film hardness is low, the carbon films or amorphous carbon films have had problems with damage by vibration when mounted on a vehicle and the corrosion resistance is lost.

### Disclosure of Invention

It is therefore an object of the present invention to provide a separator with superior corrosion resistance and a fuel cell with a minimal internal resistance.

To achieve this object and other objects, the present invention provides a separator for a solid polymer electrolyte type fuel cell, wherein multiple single cells are laminated and made up of a solid polymer electrolyte layer and catalyst electrode layers, gas diffusion electrodes and separators disposed on either side of the solid polymer electrolyte layer: wherein the separator has a separator substrate made of a metal or the like having a high mechanical strength, and at least a part of the surface of the separator substrate to make contact with a gas diffusion electrode is covered with an electrically conducting hard carbon film having excellent conductivity and corrosion resistance and provides a solid polymer electrolyte type fuel cell using this separator.

Although in the invention the material and the shape of the separator substrate are not particularly limited, a material having a mechanical strength sufficient for its use in a fuel cell for an automotive vehicle is preferable, and also a shape forming a structure having a strength sufficient for its use in a fuel cell for an automotive vehicle is preferable. The conducting hard carbon film is formed either directly on the surface of the separator substrate or with an intermediate layer therebetween. The conducting hard carbon film has a hardness of not less than 8GPa by micro-Vickers hardness or Knoop hardness. The conducting hard carbon film has a resistivity of 5×10⁻⁴ to 10 Ωcm. The hydrogen content of the conducting hard carbon film is less than 1 atom%. And at least one element constituting the separator substrate or the intermediate layer is included in the conducting hard carbon film.

The intermediate layer is a single-layer film of one from among, or a laminate film or a mixture film including two or more from among, carbides, nitrides and carbo-nitrides of metals, and particularly carbides, nitrides and carbo-nitrides of metals which are elements of group IVa, Va or VIa of the periodic table.

The conducting hard carbon film is formed by sputtering or cathode ark ion plating using solid carbon as the process material, or by plasma CVD or ionized vapor deposition using a hydrocarbon gas as the process material.

According to the invention, because a freely chosen separator substrate is coated with a conducting hard carbon film having excellent corrosion resistance, a rise of the contact resistance at the separator surface due to corrosion is prevented. This is because the conducting hard carbon film itself has extremely good corrosion resistance and does not form a substance with a high electrical resistance, such as a passive film, on its surface.

As well as having excellent adhesion strength a hard carbon film has a high film hardness, and because cracking caused by vibrations in a vehicle or the like does not readily occur, it is possible to produce a highly reliable separator. The hardness of the hard carbon film is preferably not less then 8GPa by micro-Vickers hardness or Knoop hardness. By using a high-hardness film of this kind, it is possible to obtain durability with respect to vibrations in a vehicle and the like. For the hardness measurement, either the micro-Vickers hardness is measured using a Vickers indentor with a pressing load of 0.49N or less or the Knoop hardness is measured using a Knoop indenter with a pressing load of 0.49N or less.

For the hard carbon film, diamond-like carbon (DLC) is a typical material; however, it is known that ordinary DLC has a high electrical resistance and often exhibits insulativity. Such an insulating or high-resistance DLC is unsuitable for this application. A low-resistance DLC is desirable. The value of the electrical resistance is preferably in the range of 5 ×10⁻⁴ to 10 Ωcm. A hard carbon film of less than 5×10⁻⁴ Ωcm is undesirable because it will also have a low film hardness (lower than 8GPa by micro-Vickers hardness). A value over 10 Ωcm is undesirable because the contact resistance will be high. In the resistance measuring method, the surface of an insulating substrate (for example silica glass) is coated with the subject film of the measurement. The measuring method called the four-terminal method is used.

The hydrogen content of this low-resistance hard carbon film is preferably less than 1 atom%. A hard carbon film with a hydrogen content of more than 1 atom% is undesirable because it will not have a low contact resistance. Also, by forming the hard carbon film so that an element of the separator substrate or the intermediate layer mixes with the film and thus at least one element constituting the separator substrate or the intermediate layer is included in the conducting hard carbon film, it is possible to form a good-quality conducting hard carbon film whose adherence is high and which does not readily flake off.

Particularly when a soft metal is used for the separator substrate, it is preferable for an intermediate layer made of a hard material to be interposed between the separator substrate and the hard carbon film. This hard intermediate layer is preferably a single-layer of one from among, or multiple layers or a mixture including two or more from among, carbides, nitrides and carbo-nitrides of the periodic table group IVa, Va and Via metals. These intermediate layer materials all have a high micro-Vickers hardness of 10GPa or more and have the effect of raising the durability of the hard carbon film with respect to cracking.

A preferable method for coating the high-hardness, conducting hard carbon film is sputtering or cathode ark ion plating using solid carbon as the process material or plasma CVD or ionized vapor deposition using a hydrocarbon gas as the process material. By using one of these methods it is possible to obtain excellent adhesion strength at the same time.

### Brief Description of the Drawings

Figure 1 is a schematic view of a single cell of a solid polymer electrolyte fuel cell; and
Figure 2 is a graph showing a distribution of Cr density in a sample pertaining to a fourth preferred embodiment of the invention.

### Explanation of the Referenced Numbers

1 is a solid polymer electrolyte film; 2, 3 are catalyst electrode layers; 4, 5 are gas diffusion electrodes; 6, 7 are separators; 8 is a fuel gas; 9 is an oxidant gas; 10 is a voltage meter; 11 is load resistance (1 Ω); 12 is an ammeter.

### Best Mode for Carrying out the Invention

Specific preferred embodiments of the invention will now be described; however, the invention is not limited to these preferred embodiments.

### Embodiment 1

Surface coating layers having the film materials and film structures shown in Table I were coated using different methods on one side of a separator substrate made of SUS 304. In the table, ' ark' in the coating method column is an abbreviation of cathode ark ion plating. For comparison, samples made by applying gold plating or lead-carbon compound plating to one side of a separator substrate made of SUS 304 were also prepared. A single cell was assembled by bringing into contact these separators, gas diffusion electrodes (porous graphite plates with polytetrafluoroethylene as a binder) and a solid polymer electrolyte (covered on a positive electrode side with a Pt catalyst and on a negative electrode side with a Pt-Ru catalyst) to form the structure shown in Fig. 1, and electricity was actually generated using hydrogen and oxygen.

The current density at the time of generation was made 0.1 A/cm². For the time variation of the resistance between the separators and the gas diffusion electrodes, before generation and after predetermined periods of generation the resistance between 2 and 6 in Fig. 1 was measured and tabled with the initial resistance made 1. And before the fuel cell was actually assembled, an operation of lightly rubbing the separators and the gas diffusion electrodes was carried out on all of the samples according to the invention and the comparison examples, to simulate damage to the surface coating layers caused by vibrations in a vehicle. The results are shown in Table I. It is clear from Table I that the samples according to the invention exhibit stable internal resistance in Protracted generating operation.

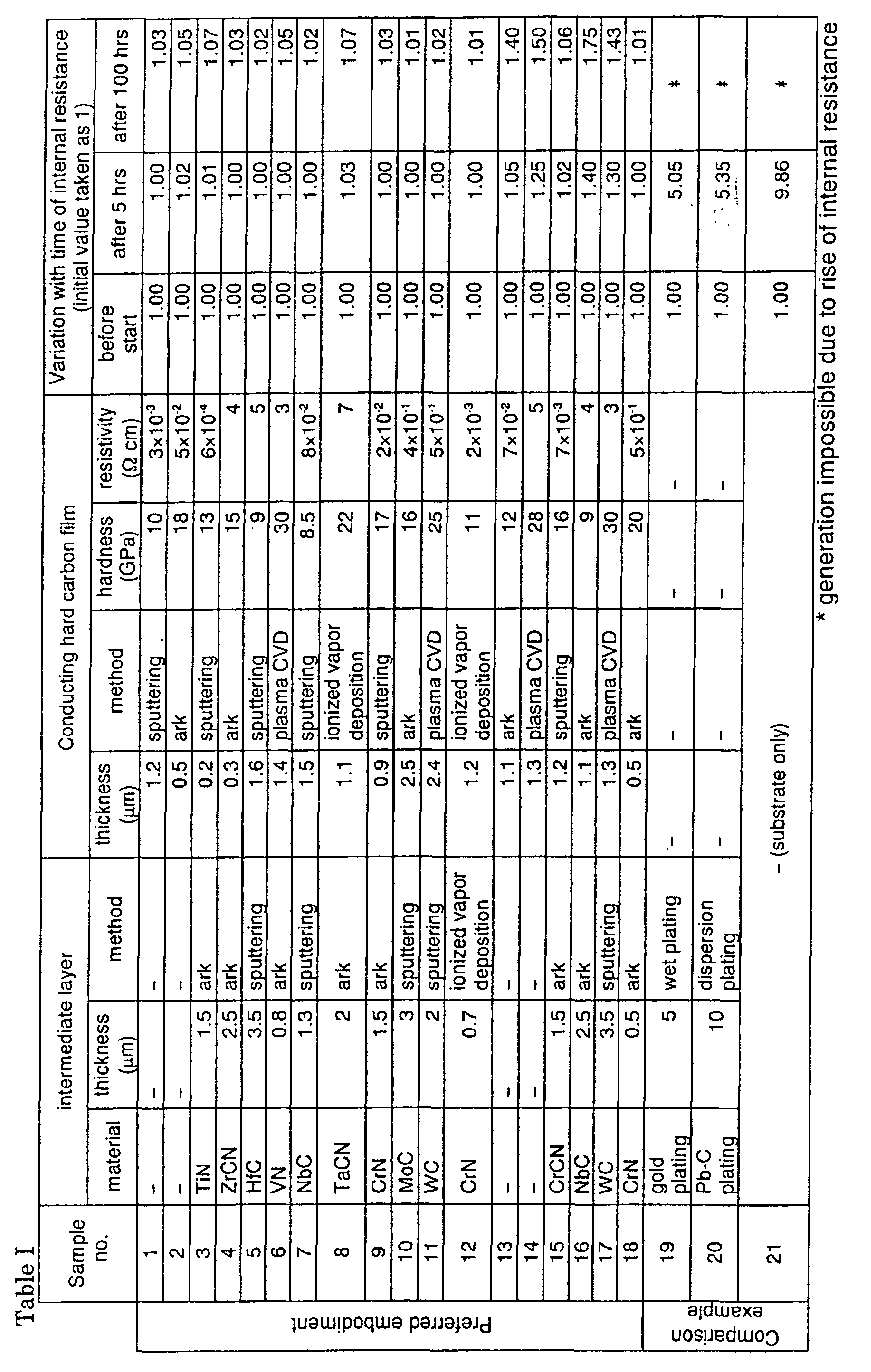

### Embodiment 2

As in the first preferred embodiment, surface coating layers having the film materials and film structures shown in Table II were coated by using different methods onto one side of a separator substrate made of SUS 316. For comparison, samples made by applying gold plating or lead-carbon compound plating to one side of a separator substrate made of SUS 316 were also prepared. A single cell was assembled by bringing into contact these separators, gas diffusion electrodes (porous graphite plates with polytetrafluoroethylene as a binder) and a solid polymer electrolyte (covered on a positive electrode side with a Pt catalyst and on a negative electrode side with a Pt-Ru catalyst) to form the structure shown in Fig. 1, and electricity was generated using hydrogen and oxygen.

The current density at the time of generation was made 0.1 A/cm². The variation with time of the resistance between the separators and the gas diffusion electrodes was measured by the same method as in the first preferred embodiment. And before the fuel cell was actually assembled, an operation of lightly rubbing the separators and the gas diffusion electrodes was carried out on all of the samples according to the invention and the comparison examples, to simulate damage to the surface coating layers caused by vibrations in a vehicle. The results are shown in Table II. It is clear from Table II that the samples according to the invention exhibited stable internal resistance under prolonged generating operation.

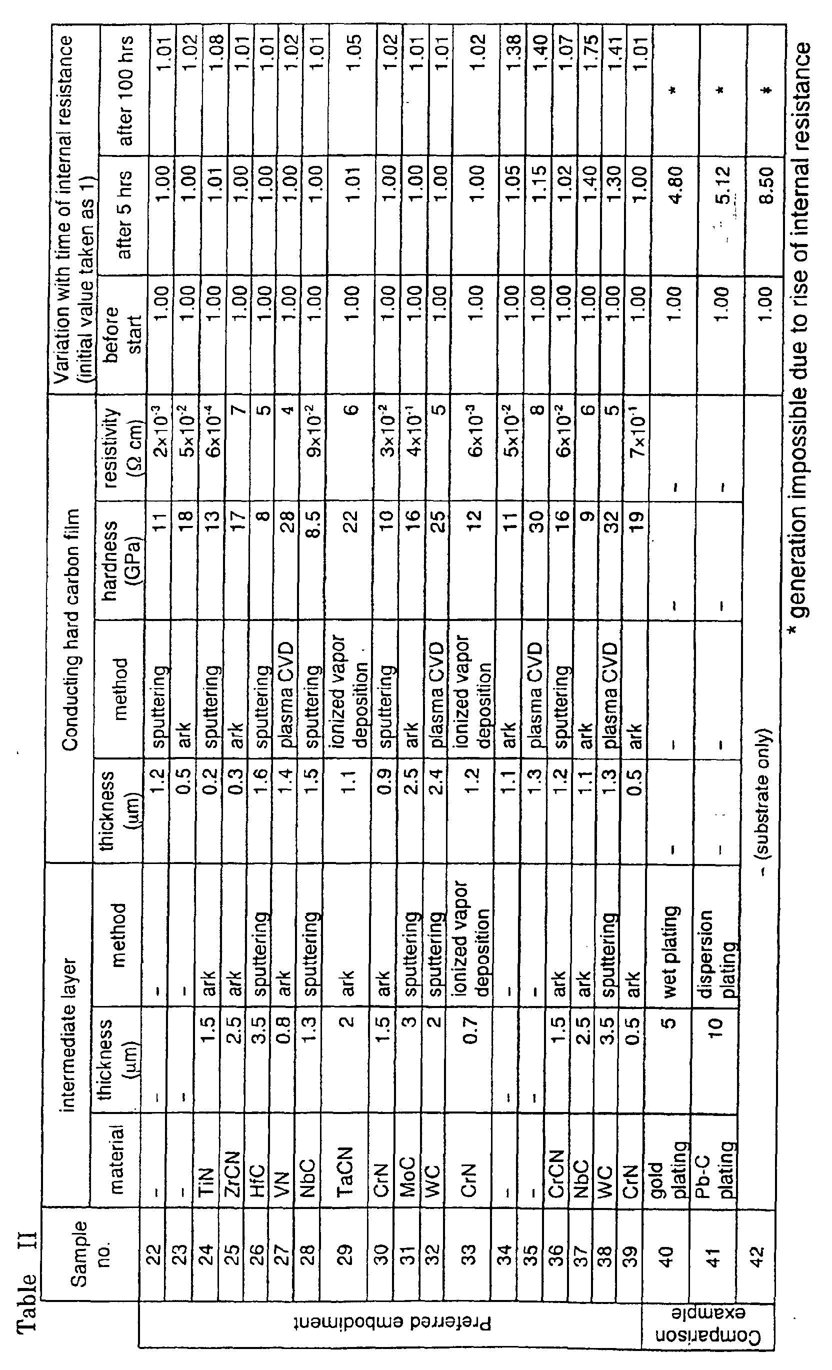

### Embodiment 3

As in the first and second preferred embodiments, surface coating layers having the film materials and film structures shown in Table III were coated by using different methods onto one side of a separator substrate made of an aluminum alloy including 96 wt% aluminum, namely alloy number A5052 specified in JIS-H4000. For comparison, samples made by applying gold plating or lead-carbon compound plating to one side of a separator substrate made of the same aluminum alloy were also prepared. A single cell was assembled by bringing into contact these separators, gas diffusion electrodes (porous graphite plates with polytetrafluoroethylene as a binder) and a solid polymer electrolyte (covered on a positive electrode side with a Pt catalyst and on a negative electrode side with a Pt-Ru catalyst) to form the structure in Fig. 1, and electricity was generated using hydrogen and oxygen.

The current density at the time of generation was made 0.1 A/cm². The variation with time of the resistance between the separators and the gas diffusion electrodes was measured by the same method as in the first preferred embodiment. And before the fuel cell was actually assembled, an operation of lightly rubbing the separators and the gas diffusion electrodes was carried out on all of the samples according to the invention and the comparison examples, to simulate damage to the surface coating layers caused by vibrations in a vehicle. The results are shown in Table III. It is clear from Table III that the samples according to the invention exhibited stable internal resistance in long period generating operation.

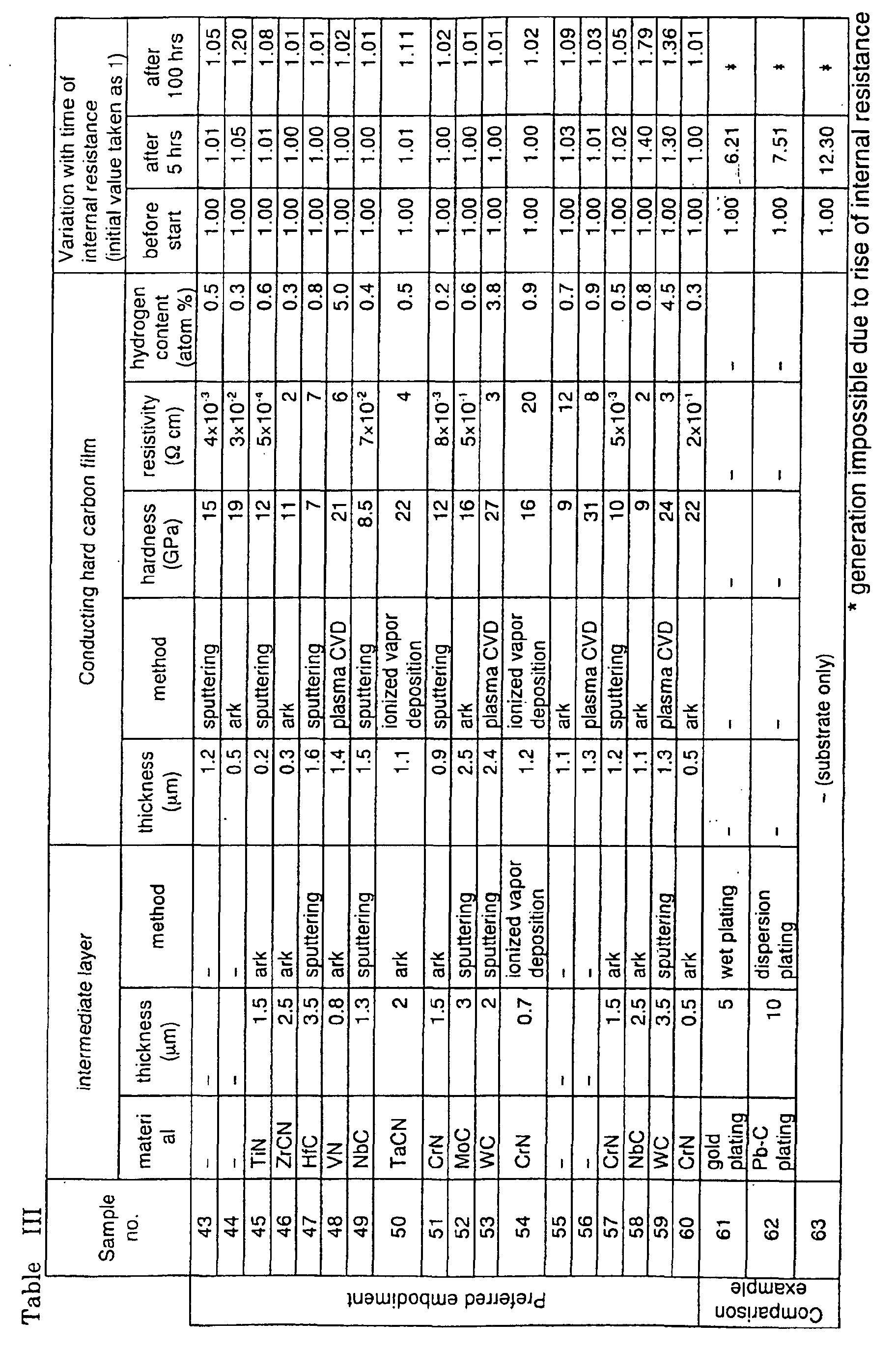

### Embodiment 4

Surface coating layers having the film materials and film structures shown in Table IV were coated by cathode ark ion plating onto one side of a separator substrate made of SUS 304. In sample no. 64, first only the intermediate layer was deposited, then for one minute the intermediate layer and the conducting hard carbon film were deposited simultaneously, and then only the conducting hard carbon film was deposited. In sample no. 65, first only the intermediate layer was deposited and then only the conducting hard carbon film was deposited. When the respective variations of internal resistance with time were measured, it was found that in sample no. 64 the internal resistance had not risen substantially even after 200 hours, which is an excellent characteristic.

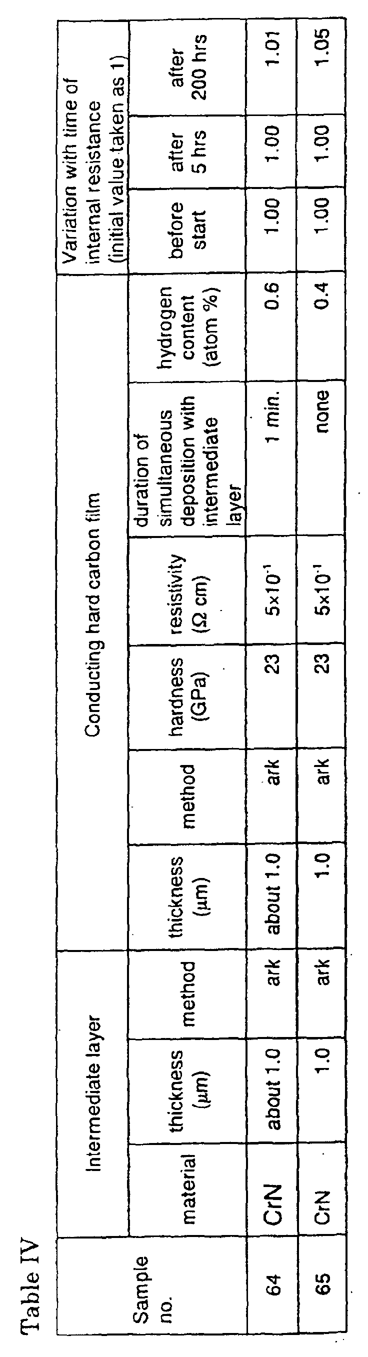

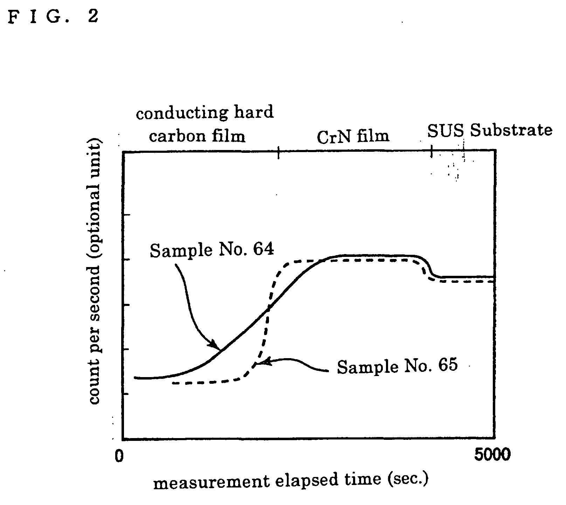

When the Cr density in the depth direction of the film was analyzed with a Secondary Ion Mass Spectrometer (SIMS), it was found that in sample no. 64, Cr was included in the conducting carbon film as shown in Fig. 2. In sample no. 65, on the other hand, almost no Cr was included in the conducting carbon film.

### Industrial Applicability

With this invention it is possible to obtain a solid polymer electrolyte type fuel cell having high reliability over a long period.

## Claims

1. A separator for a solid polymer electrolyte type fuel cell wherein multipile single cells are laminated and made up of a solid polymer electrolyte layer and catalyst electrode layers, gas diffusion electrodes and separators disposed on either side of the solid polymer electrolyte layer, wherein at least a part thereof to make contact with a gas diffusion electrode is covered with an electrically conducting hard carbon film.

2. A separator for a solid polymer electrolyte type fuel cell claimed in claim 1, wherein an intermediate layer comprising a single layer film of one compound from among the group consisting of metal carbides, metal nitrides and metal carbo-nitrides or a laminate film or a mixture film including two or more compounds from among the same group is interposed between the conducting hard carbon film and the separator substrate.

3. A separator for a solid polymer electrolyte type fuel cell claimed in claim 2, wherein a metal of the metal carbide, metal nitride or metal carbo-nitride of the intermediate layer is an element or two or more elements of group IVa, Va or Via.

4. A separator for a solid polymer electrolyte type fuel cell claimed in any one of claims 1 through 3, wherein the micro-Vickers hardness or the Knoop hardness of the conducting hard carbon film is a hardness of not less than 8GPa.

5. A separator for a solid polymer electrolyte type fuel cell claimed in any one of claims 1 through 4, wherein the resistivity of the conducting hard carbon film is 5×10⁻⁴ to 10 Ωcm.

6. A separator for a solid polymer electrolyte type fuel cell claimed in any one of claims 1 through 5, wherein the hydrogen content of the conducting hard carbon film is less than 1 atom%.

7. A separator for a solid polymer electrolyte type fuel cell claimed in any one of claims 1 through 6, wherein at least one element among the elements constituting the separator substrate or the intermediate layer is included in the conducting hard carbon film.

8. A separator for a solid polymer electrolyte type fuel cell claimed in any one of claims 1 through 7, wherein the conducting hard carbon film is formed by sputtering or cathode ark ion plating using solid carbon as the process material or by plasma CVD or ionized vapor deposition using a hydrocarbon gas as the process material.

9. A solid polymer electrolyte type fuel cell using a separator claimed in any one of claims 1 through 8.
